# EUROPEAN PATENT APPLICATION

(11) **EP 3 223 163 A1**
(43) Date of publication of application: **27.09.2017**
(21) Application number: 15805553.3
(22) Date of filing: 30.10.2015
(51) Int. Cl.: G06F 13/40

(54) **TEXTILE WIRELESS CONTROL AND FEED BETWEEN MOBILE DEVICES AND SMART TEXTILES**

(30) Priority: 17.11.2014 ES 201431690
(71) Applicant: Sensing Tex, S.L., 08042 Barcelona (ES)
(72) Inventor: GOMEZ ANTA, Luis Miguel, 08042 Barcelona (Catalunia) (ES); RIDAO GRANADO, Miguel, 08042 Barcelona (Catalunia) (ES)
(74) Representative: Isern-Jara, Nuria
(86) International application number: PCT/ES2015/070781
(87) International publication number: WO 2016/079352

(57) **Abstract**

A wired textile control and power supply system as a connection interface between a smart telephone (1) and an electronic textile (3), the connection interface system is a completely textile Universal Serial Bus (USB) On The Go (OTG) connection interface and is composed of textile circuitry and which comprises: (2a) a harmonized standard textile AB USB micro-connector from the mobile telephony industry and is connected (2b) to a textile cable which produces the USB OTG exchange of power supply and control, (2c) optionally USB textile circuitry for signal conditioning and (2d) a control and power supply connection cable to the electronic textile (3).

The proposed invention does not require the additional electronics of a control system dedicated to the electronic textile, which makes it simpler, more comfortable and economic than any other alternative for communication between smart mobile telephone devices and electronic textiles.

## Description

The object of the present invention is a wired textile connection system between a smart mobile telephone and a smart textile, with the object of supplying power to and controlling the electronic textile by means of the use of a mobile telephone, the connection system has been designed specifically to be completely flexible and textile, that is to say, there are no rigid elements such as heavy batteries, which, in any of the forms and sizes thereof makes it completely invisible to the user. The final system allows the electronic textile to be connected to the mobile and all the control and power supply functionalities of the mobile to be used, from which intelligence and functionality is provided to the electronic textile.

### PRIOR ART

At present, the connection and the use of mobile telephones for the control of electronic textiles has normally been implemented by means of Bluetooth 2.0 or 4.0 wireless communication, which makes a rigid interface necessary, which requires a high number of components and an independent power supply system for providing intelligence to the electronic textile.

Smart textiles connected with smart mobile telephones by means of the use of textile USB cables (Universal Serial Bus) On The Go (OTG) and textile circuitry such as that proposed in the present invention is not stated in the prior art.

Elements are known which are connected to smart telephones by means of USB OTG cables such as memory units, accessories such as keyboards, computer mice and in general electronic devices without a textile nature and by means of non-textile cables and electronic circuits.

Devices are also known which are connected to electronic textiles, which require dedicated electronics for the power supply and control of said textiles, even if they are connected to the mobile telephone by means of wireless connection, the dedicated electronics increases the weight and the volume of the system as a whole and makes it uncomfortable for the user.

Dedicated electronics also translates into a higher manufacturing cost. The proposed invention does not require additional electronics and in the case of having it, it is completely textile and integrated in a manner, which is imperceptible to the user.

For the control of the electronic textiles, a communications interface is required which allows the control of the functions of the connected electronic textile. The proposed system uses connection solutions, which are common in the mobile telephony sector and allow interaction with the electronic textile receiving power supply and control from the same, the control is carried out by means of apps developed to be used on the smart telephone.

### DESCRIPTION OF THE INVENTION

Smart telephones are continually being improved in terms of their characteristics of processing capacity, autonomy, storage capacities, data transmission, etc. Current smart telephones are capable of carrying out complex calculations, analyzing movements, counting steps, illuminating LEDs, etc. A number of applications have been developed for entertainment and health environments and many other fields not described here.

The present invention has been developed with the aim of providing a completely textile communications interface which allows the smart fabrics to be connected to smart telephones by means of a USB OTG textile connection cable, reducing the electronics required for signal conditioning by means of flexible, elastic or rigid circuits with a size less than 1 cm², such that it makes the connection system imperceptible to the user, thus increasing the comfort thereof. The connection system enables the power supply from the smart telephone itself, eliminating the external battery and using the smart telephone as the control interface of the smart fabric. The object of the present invention is to solve the previously mentioned drawbacks, also providing other additional advantages, which will be evident from the description attached below.

A wired textile connection system between a smart mobile telephone and a smart textile is therefore an object of the present invention with the aim of supplyina power to and controlling the smart textile by means of the use of a mobile telephone.

Thanks to its special design, the system presented here is capable of controlling and supplying functions as well as collecting data in electronic textiles.

Another of the principal advantages of the system presented here is that due to the textile nature thereof, it is flexible, deformable, light, washable and therefore, it can be integrated into any garment and in general into any textile product.

Thus, thanks to its textile nature and it being a non-intrusive and light system, the system is completely functional and integrated and has a simple, functional and economic solution for a connection between both devices.

Throughout the description and the claims, the word "comprises" and the variants thereof do not intend to exclude other technical characteristics, additions, components or steps. For the person skilled in the art, other objects, advantages and characteristics of the invention will be deduced in part from the description and in part from the practice of the invention. The following examples and drawings are provided in an illustrative manner and it is not intended to restrict the present invention. The present invention also covers all possible combinations of particular and preferred embodiments indicated here.

### BRIEF DESCRIPTION OF THE FIGURES

Below a brief description of a series of drawings is given which aids in better understanding the invention and which is expressly related to one embodiment of said invention, which is presented as a non-limiting example of the same.

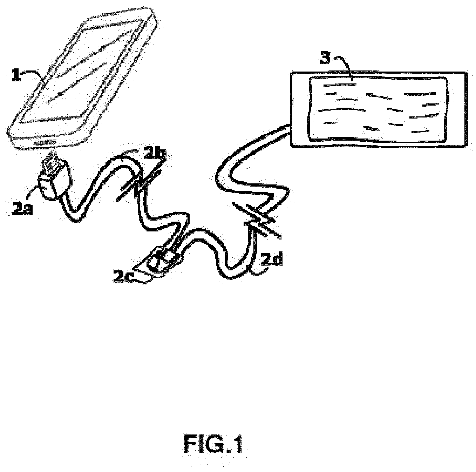

- Fig. 1: shows a view of the USB OTG textile connection system as means for connecting a smart telephone and a smart textile

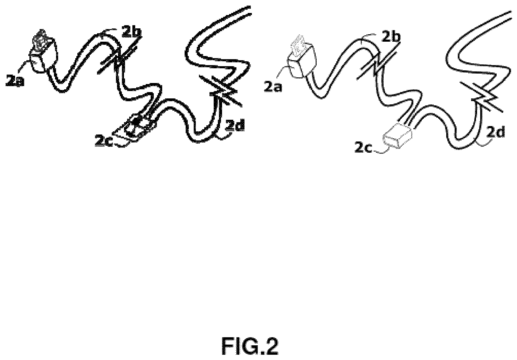

- Fig. 2: shows a detailed view of the components, which comprise the wired textile connection system with flexible and rigid textile circuitry respectively.

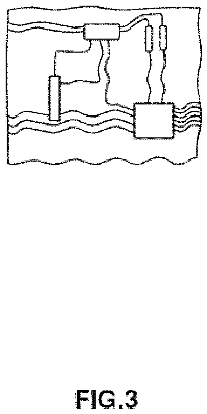

- Fig. 3: shows a detailed view of the optional flexible textile USB circuitry of the connection system.

### PREFERRED EMBODIMENT OF THE INVENTION

In the attached figures, a preferred embodiment of the invention is shown. More specifically, a system is shown which comprises the wired textile control and power supply system as the connection interface between a smart telephone (1) and a smart textile (3) [characterized] by the fact that it comprises a completely textile USB OTG connection interface system (2) and is composed of textile circuitry and which comprises (2a) a harmonized standard textile AB USB micro-connector from the mobile telephony industry and is connected (2b) to a textile cable which produces the USB OTG exchange of power supply and control, (2c) optionally USB textile circuitry for signal conditioning and (2d) a control and power supply connection cable to the electronic textile (3), this electronic textile can be a luminous textile or a touch and/or pressure sensor textile, although these should not be limiting to the invention.

The fact of incorporating a completely flexible and elastic textile cable makes it completely imperceptible to the user, the fact of using the mobile telephone, makes it much more economic.

Preferably, the connection system has textile cables based on wires or the printing of circuits on the textile support, in the case of threads, principally and preferably, it comprises leading wires woven in a belt machine with which belts result, which can be flexible and elastic. In the case of printing, the inks of the same are elastic and are printed on fabrics.

An optional electronics system for signal conditioning is also an object of the present invention, which allows the individualized control of different power supply channels for the independent control of one or various electronic textiles.

The optional electronic control system has an integrated circuit (IC) compatible with USB connectivity, which allows the data sent by the mobile telephone to be collected. The data received can be transmitted to a second IC for the processing and signal treatment thereof. This second IC is responsible for transmitting the information to the communication channels for the activation of the functionalities of the smart fabric.

This optional electronic control system is preferably, but not limitatively, a hybrid printing electronic system in which the circuits are sewn or printed on a flexible textile support and in some cases are elastic and some very small components added by means of positioning technology. (Pick and Place)

In a state of use, the present system would, for example control the turning on and turning off of a luminous textile, activate it with a flash effect in a determined manner, control the colors, the intensity and the brightness.

In terms of an application, for example in a luminous safety garment, this would serve to control the high visibility systems such as the color, the intensity and the frequency of intermittence.

The entire system in general allows the cost relating to the dedicated electronics, which make the product expensive, to be avoided, said electronics having to be recharged daily and which are not practical in terms of portability and comfort due to the high weight thereof.

Some exemplary embodiments are described below to facilitate the understanding of the invention:
1. Wired textile control and power supply system as a connection interface between a smart telephone (1) and a smart textile [characterized] by the fact that it consists of a (2) completely textile USB OTG connection interface system and is composed of textile circuitry and which comprises (2a) a harmonized standard textile AB USB micro-connector from the mobile telephony industry and is connected (2b) to a textile cable which produces the USB OTG exchange of power supply and control, (2c) optionally USB textile circuitry for signal conditioning and (2d) a control and power supply connection cable to the electronic textile (3)
2. Wired textile control and power supply system according to 1, characterized by the fact that the male USB connector (2a) is resistant to washing and has a connection to a textile cable by means of adhesive, flexible soldering and/or pressure of a rigid surface no greater than that of the USB connector itself of 0.5 cm² similar to a button, which makes it completely imperceptible to the user.
3. Wired textile control and power supply system according to 1, characterized by the fact that the textile cable (2b) and (2d) can be based on printing of circuits on the textile support or based on woven leading wires.
4. Wired textile control and power supply system according to 3, characterized by the fact that the printing is lithography, silkscreen or by ink jet.
5. Wired textile control and power supply system according to 3, characterized by the fact that the textile cable is based on leading wires applied by weaving, embroidering or sewing.
6. Wired textile control and power supply system according to 3, characterized by the fact that the textile cable is flexible and elastic to allow the maximum textile comfort, implemented with elastic printed circuits or elastic fabrics with leading wires.
7. Wired textile control and power supply system according to 1, characterized by the fact that the optional USB textile circuitry consists of flexible circuitry or alternatively can be rigid, with a size no greater than 1 cm² similar to a button, which in both cases, makes it completely imperceptible to the user.
8. Wired textile control and power supply system according to 7, characterized by the fact that the rigid, semi-rigid or flexible circuitry can be implemented with print, embroidering, hybrid or conventional technology.
9. Wired textile control and power supply system according to 7, characterized by the fact that the rigid, semi-rigid or flexible circuitry can control various analogue, digital and PWM outputs and inputs.
10. Wired textile control and power supply system according to 7, characterized by the fact that the rigid, semi-rigid or flexible circuitry can incorporate a flexible battery in order to be able to increase the energetic possibilities and necessities of the controlled electronic textiles.
11. Wired textile control and power supply system according to 1, characterized by the fact that the system can control both sensors and electronic textile actuators.
12. Wired textile control and power supply system according to 11, characterized by the fact that the sensors that can be controlled can be contact, pressure, capacitive, temperature, moisture, heartbeat and respiration sensors.
13. Wired textile control and power supply system according to 11, characterized by the fact that the actuators that can be controlled can be light emitting textiles, heat emitting textiles, antennas and mechanical actuator textiles.

## Claims

1. A wired textile control and power supply system as a connection interface between a smart telephone (1) and an electronic textile (3) **characterized by** the fact that it consists of a system (2) of a completely textile Universal Serial Bus (USB) On The Go (OTG) connection interface and is composed of textile circuitry and which comprises:
a harmonized standard textile AB USB micro-connector (2a) from the mobile telephony industry;
a textile cable (2b) which produces the USB OTG exchange of power supply and control and is connected to the textile AB USB micro-connector (2a);
USB textile circuitry (2c) for signal conditioning; and
a control and power supply connection cable (2d) to the electronic textile (3).

2. The wired textile control and power supply system according to claim 1, **characterized by** the fact that the male USB connector (2a) is resistant to washing and has a connection to a textile cable by means of adhesive, flexible soldering and/or pressure of a rigid surface no greater than that of the USB connector itself of 0.5 cm² similar to a button, which makes it completely imperceptible to the user

3. The wired textile control and power supply system according to claim 1, **characterized by** the fact that the textile cable (2b) and (2d) can be based on printing of circuits on the textile support or based on woven leading wires.

4. The wired textile control and power supply system according to claim 3, **characterized by** the fact that the printing is lithography, silkscreen or by ink jet.

5. The wired textile control and power supply system according to claim 3, **characterized by** the fact that the textile cable is based on leading wires applied by weaving, embroidering or sewing.

6. The wired textile control and power supply system according to claim 3, **characterized by** the fact that the textile cable is flexible and elastic to allow the maximum textile comfort, implemented with elastic printed circuits or elastic fabrics with leading wires.

7. The wired textile control and power supply system according to claim 1, **characterized by** the fact that the optional USB textile circuitry consists of flexible circuitry or alternatively can be rigid, with a size no greater than 1 cm² similar to a button, which in both cases, makes it completely imperceptible to the user.

8. The wired textile control and power supply system according to claim 7, **characterized by** the fact that the rigid, semi-rigid or flexible circuitry can be implemented with print, embroidering, hybrid or conventional technology.

9. The wired textile control and power supply system according to claim 7, **characterized by** the fact that the rigid, semi-rigid or flexible circuitry can control various analogue, digital and PWM outputs and inputs.

10. The wired textile control and power supply system according to claim 7, **characterized by** the fact that the rigid, semi-rigid or flexible circuitry can incorporate a flexible battery in order to be able to increase the energetic possibilities and necessities of the controlled electronic textiles.

11. The wired textile control and power supply system according to claim 1, **characterized by** the fact that the system can control both sensors and electronic textile actuators.

12. The wired textile control and power supply system according to claim 11, **characterized by** the fact that the sensors that can be controlled can be contact, pressure, capacitive, temperature, moisture, heartbeat and respiration sensors.

13. The wired textile control and power supply system according to claim 11, **characterized by** the fact that the actuators that can be controlled can be light emitting textiles, heat emitting textiles, antennas and mechanical actuator textiles.
